# EUROPEAN PATENT APPLICATION

(11) **EP 1 703 707 A1**
(43) Date of publication of application: **20.09.2006**
(21) Application number: 06250696.9
(22) Date of filing: 09.02.2006
(51) Int. Cl.: H04M 1/247, H04M 1/725, G06F 3/023

(54) **Digital multifunction and information display device and method thereof**

(30) Priority: 15.03.2005 KR 2005021564
(71) Applicant: Samsung Electronics Co., Ltd., Suwon-si, Gyeonggi-Do (KR)
(72) Inventor: Shin, Chang Beom, Seoul (KR); Jang, Young Sang, Anyang-Si, Gyeonggi-Do (KR); Lee, Bong Won, Gangnam-Gu, Seoul (KR); Jin, Sun Mi, Seodaemoon-Gu, Seoul (KR); Kwon, O Jae, Gwangjin-Gu, Seoul (KR); Han, Sang Woo, Gunpo-Si, Gyeonggi-Do (KR); Lee, Sang Jae c/o507-402 Geumhwamaeul Joogong Apt., Yongin-Si, Gyeonggi-Do (KR); Lee, Sung Han c/o102-1103 Samsung Raemian Apt.,, Hwasung-Si, Gyeonggi-Do (KR)
(74) Representative: Brandon, Paul Laurence

(57) **Abstract**

A digital multifunction and information display device and method, which may include a plurality of buttons (31, 32, 33, 40) that have button information corresponding to a plurality of modes. Once a mode is selected the information displayed corresponding to the plurality of buttons may be changed to detailed information corresponding to the selected mode. The method may include selecting a button corresponding to a desired mode of operation, changing the mode information of each of the buttons to detailed information of the selected mode, and displaying the detailed information.

## Description

The present invention relates to digital multifunction devices and methods of displaying information in digital multifunction devices.

Digital devices, such as a MP3 player, radio, recorder, remote controller and camera, are generally configured in the form of single products. Recent innovation has combined at least two different types of digital devices to constitute one integrated system. As the combination of user functions and products continues to grow, users will be allowed to use various types of functions and products within one device.

For example, a MP3 player has recently been developed as a multimode device having a radio mode, a recorder device mode, a camera mode, etc., in addition to a commonly associated music playback mode. In another example, a mobile phone has a MP3 player mode, a camera mode and a camcorder mode, as well as a commonly associated communication mode. Also, a digital camera has a variety of modes such as a camcorder mode and a MP3 player mode. Each of these various modes includes a variety of sub-functions.

Buttons corresponding to the various modes and functions are conventionally disposed on the front, rear, left and right sides of the body of a digital device. If the user pushes one of the buttons, the current mode of the device may change to a different mode displayed on a graphic user interface (GUI) screen of the digital device. The operating state of the device is displayed on the GUI screen so that it can be confirmed by the user. In the case where each of the buttons correspond directly to each of the modes and corresponding functions, an increase in the number of modes or functions causes an increase in the number of required buttons. However, there is a limitation in the number of buttons that can be installed on one device.

Another way to accommodate a variety of modes or functions may be to set the functions in the GUI screen of the digital device, and the user may search for and execute desired information of the functions by scrolling through the functions in the GUI screen. In this example, the GUI may contain menus provided in the GUI screen that include excessive amounts of unnecessary functions. For this reason, the user may have difficulty in searching through a large amount of information for a desired function.

In order to solve the above problems, a method for selecting menu options in a digital device using fewer buttons has been proposed in Korean Patent Laid-open Publication No. 1999-0048640.

In the proposed menu selection method of Korean Patent Laid-open Publication No. 1999-0048640, the user does not search for a desired menu item by using buttons, but selects the desired menu item when this desired menu item periodically comes around as menu items are automatically shifted through the menu at regular time intervals. As a result, the number of button operations of the user is reduced. However, using the automatic shift approach method, the user is still required to operate buttons for executing the various functions, and thus may experience difficulty in selecting desired information.

Another type of digital device is an integrated remote controller, which functions as a plurality of remote controllers, such as, for example, a TV remote controller, a DVD remote controller, a home theater remote controller and/or an air conditioner remote controller, which are integrated into a single remote controller device. The integrated remote controller has a large number of buttons and is complicated to use.

Reducing the number of unnecessary buttons corresponding to each mode or function may lessen the amount of user confusion. In addition, in a configuration having a reduced number of buttons, a manufacturer may lower costs and provide a simple device design.

Preferred embodiments of the present invention aim to provide a digital multifunction device with a display that may include information related to a mode or a function corresponding to a selected mode being displayed in an effort to reduce the number of user operations.

Preferred embodiments of the present invention provide a digital multifunction device that may include button information that changes with a selected mode. The changes in button information may provide a user with more optimum detailed information while reducing the number of buttons required in the device configuration.

According to the present invention in a first aspect, there is provided a digital multifunction device with at least two modes of operation, the device comprising a plurality of buttons operable to select at least one of the at least two modes or detailed information of one of the at least two modes, and a display screen, which may change a current mode information displayed on the display screen to the detailed information corresponding to a mode selected by the operation of one or more of the plurality of buttons.

The device may include the plurality of buttons adapted for a user to select one or more operations of the selected mode.

The device may also include the display screen further adapted to display operation information of the selected mode.

The plurality of buttons may include a first selection button to change or select operation information of the selected mode, and a second selection button to select any one of the modes or the detailed information of the selected mode.

The device may further comprise one or more information display screens to display information describing the corresponding modes of each of the buttons, and once a mode is selected displaying detailed information corresponding to the selected mode. In addition, the information display screen may be installed adjacent to the buttons.

The device may further comprise a controller for performing a control operation to display the detailed information or operation information of the mode selected according to a present operating state of the digital multifunction device. The controller may also perform a control operation to change the current mode to the selected mode or execute another operation of the selected mode in addition to the current mode being changed to the selected mode, according to a push and hold time of one of the plurality of buttons.

According to the present invention in a second aspect, there is provided a method of displaying information in a digital multifunction device with at least two modes comprising selecting at least one button of a plurality of buttons to select a desired mode, changing the mode information of each of the buttons to detailed information corresponding to the selected mode and displaying the detailed information.

The method of displaying may further include displaying only information corresponding to the selected mode. Additionally, the information corresponding to the selected mode may be the detailed information or operation information of the selected mode.

According to the present invention in a third aspect, there is provided a device with dynamic button functionality comprising a plurality of buttons with at least first and second levels of operation to be performed, in the first level of operation a mode can be selected from a plurality of modes, and in the second level of operation a plurality of sub-mode functions of a predetermined mode can be selected. The device further includes at least one information display screen to display the modes or the plurality of sub-mode functions based on the level of operation being performed.

According to the present invention a fourth aspect, there is provided a method of changing button functionality comprising selecting a mode assigned to one of a plurality of buttons, changing types of operations to be performed by the plurality of buttons based on the mode selected, updating a display screen by replacing displays of the modes assigned to the plurality of buttons with detailed information of functions associated with the selected mode, and selecting one of the plurality of functions by selecting one of the plurality of buttons.

According to the present invention in a fifth aspect, there is provided a device to perform more than one operation in a single button selection comprising a plurality of buttons to select one of a plurality of mode assigned to a respective plurality of buttons by holding the button associated with the selected mode for a first period of time to select the mode or holding the button for a second period of time to select the mode and perform a sub-mode function associated with the selected mode.

According to the present invention in a sixth aspect, there is provided a method of performing more than one operation in a single button selection comprising selecting one of a plurality of modes assigned to a respective plurality of buttons, and holding the button associated with the selected mode for a first period of time to select the mode or holding the button for a second period of time to select the mode and perform a sub-mode function associated with the selected mode.

The present invention will become apparent and more readily appreciated from the following description of the embodiments, by way of example only, taken in conjunction with the accompanying drawings of which:
FIG. 1 is a front view illustrating a first standby state of a digital multifunction device according to an embodiment of the general inventive concept;
FIG. 2 is a front view illustrating a second standby state of the digital multifunction device according to an embodiment of the general inventive concept;
FIG. 3 is a front view illustrating a music mode entry state of the digital multifunction device according to an embodiment of the general inventive concept;
FIG. 4 is a front view illustrating a music playback state of the digital multifunction device according to an embodiment of the general inventive concept;
FIG. 5 is a front view illustrating a radio mode state of the digital multifunction device according to an embodiment of the general inventive concept;
FIG. 6 is a front view illustrating a first dictionary mode state of the digital multifunction device according to an embodiment of the general inventive concept;
FIG. 7 is a front view illustrating a second dictionary mode state of the digital multifunction device according to an embodiment of the general inventive concept;
FIG. 8 is a block diagram illustrating an information display configuration of the digital multifunction device according to an embodiment of the general inventive concept;
FIG. 9 is a flow chart illustrating an information display operation of the digital multifunction device according to an embodiment of the general inventive concept;
FIG. 10 is a flow chart illustrating a method of changing button functionality according to an embodiment of the general inventive concept; and
FIG. 11 is a flow chart illustrating a method of performing more than one operation in a single button selection according to an embodiment of the general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

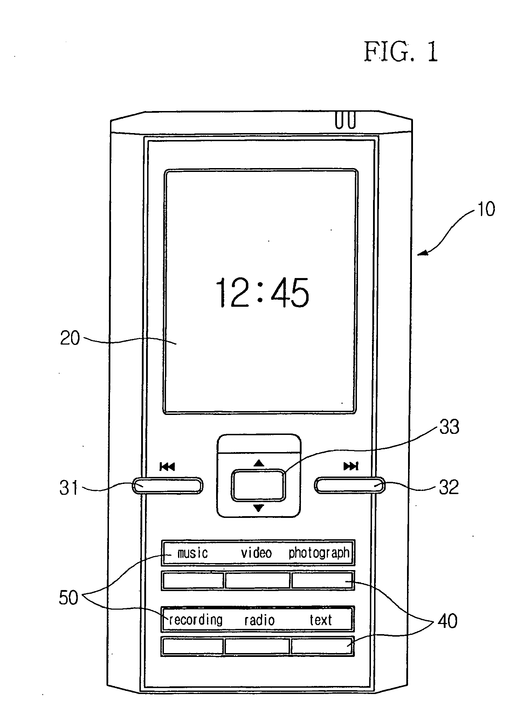

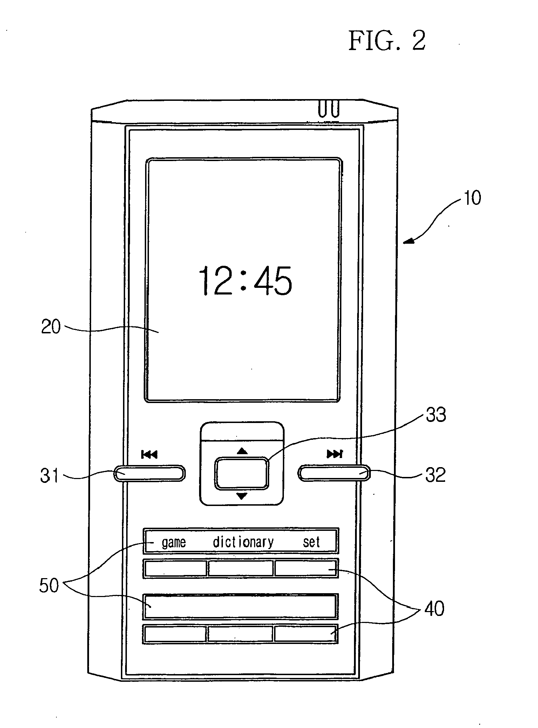

FIG. 1 illustrates a front view of a digital multifunction device in a first standby state according to an embodiment of the general inventive concept. FIG. 2 illustrates a front view of a digital multifunction device in a second standby state according to an embodiment of the general inventive concept.

In FIGS. 1 and 2, the upper part of the body 10 of the digital multifunction device includes an operation display screen 20, which may be made of a color liquid crystal display (LCD). The operation display screen 20 may be adapted to display the current time, the remaining power of a battery, the operating state of each mode (for example, a music mode, video mode, radio mode, dictionary mode or other modes of operation), and/or other similar information. Next to the operation display screen 20 are a plurality of buttons which may be operated by a user to select a mode or a function of detailed information or operation information of each mode.

The plurality of buttons may include, for example, a previous button 31 to select a previous step, a next button 32 to select a next step, a wheel button 33 to change or select the operation information of each mode, and/or soft buttons 40 to select each mode or a function of the detailed information of each mode.

The soft buttons 40 may include, for example, six buttons arranged in upper and lower rows. However, the number of soft buttons 40 can change based on the number of modes and/or the amount of detailed information of each mode. Installed above the soft buttons 40 are information display screens 50 which may be made of color LCDs and arranged in upper and lower rows corresponding to the soft buttons 40. The information display screens 50 may be adapted to display information related to the respective soft buttons 40. The information display screens may provide a dynamic display of information corresponding to the soft buttons 40. The dynamic feature may change information displayed on the information display screens 50 based on a selection made by a user.

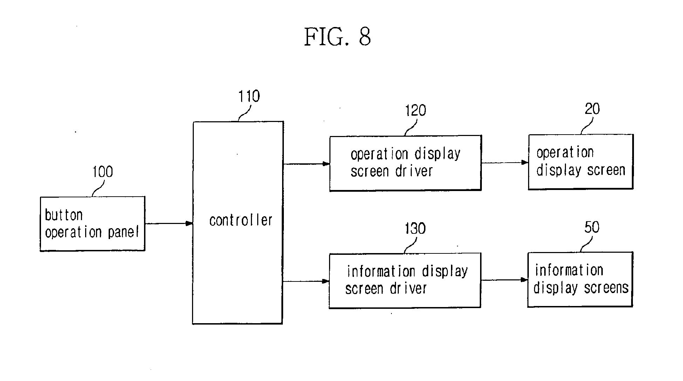

FIG. 8 is a block diagram illustrating an example operation of an information display configuration to display information on the digital multifunction device, according to an embodiment of the general inventive concept. As illustrated in FIG. 8, the digital multifunction device may comprise a button operation panel 100, a controller 110, an operation display screen driver 120, and an information display screen driver 130.

The button operation panel 100 may include the plurality of buttons 31, 32, 33 and 40 to select a desired mode, function and/or other types of operations. A selection may be made based on the user's input. The controller 110 may be adapted to determine which one of the buttons 31, 32, 33 and 40 in the button operation panel 100 is selected by the user, and output a control signal to display detailed information and/or operation information of a mode corresponding to the selected button.

The operation display screen driver 120 may be adapted to drive the operation display screen 20 in response to the control signal received from the controller 110. The information display screen driver 130 may be adapted to drive the information display screens 50 in response to the control signal received from the controller 110.

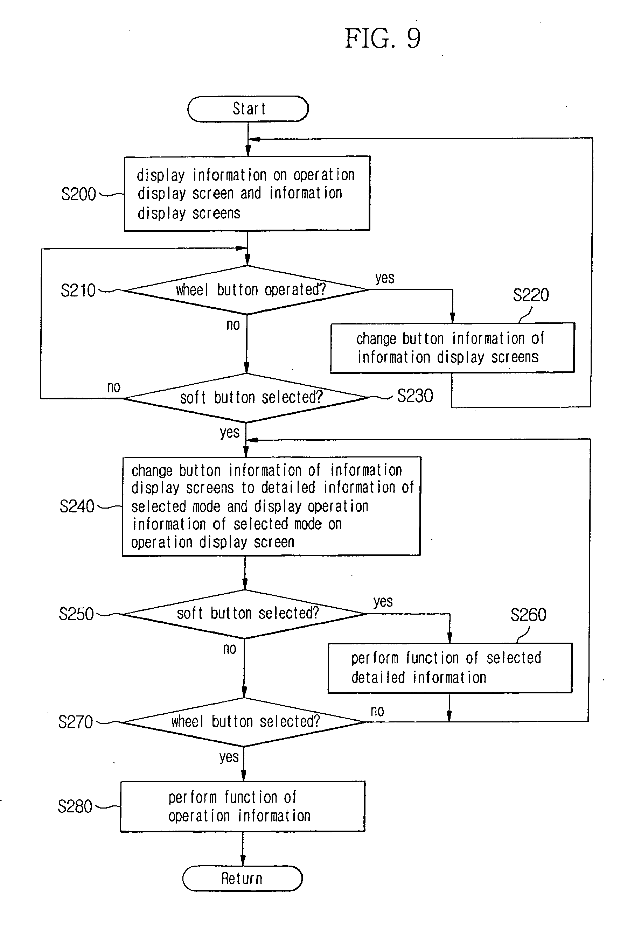

FIG. 9 is a flow chart illustrating information display operations of the digital multifunction device described above, according to an embodiment of the general inventive concept.

Referring to FIG. 9, if the wheel button 33 is pushed for a long period of time (for example, about two seconds), the digital multifunction device can be powered on and enter into a first standby state, where a current time may be displayed on the operation display screen 20, as illustrated in FIG. 1 (operation S200). In addition, modes of operation (for example, music, video, photograph, recording, radio and text button information) may be displayed on the information display screens 50 installed adjacent to the soft buttons 40, also as illustrated in FIG. 1 (operation S200).

If the wheel button 33 is selected in the first standby state (operation S21 0), the digital multifunction device may enter into a second standby state where the button information of the information display screens 50 may change to other modes of operation (for example, game, dictionary and set button information), as illustrated in FIG. 2 (operation S220).

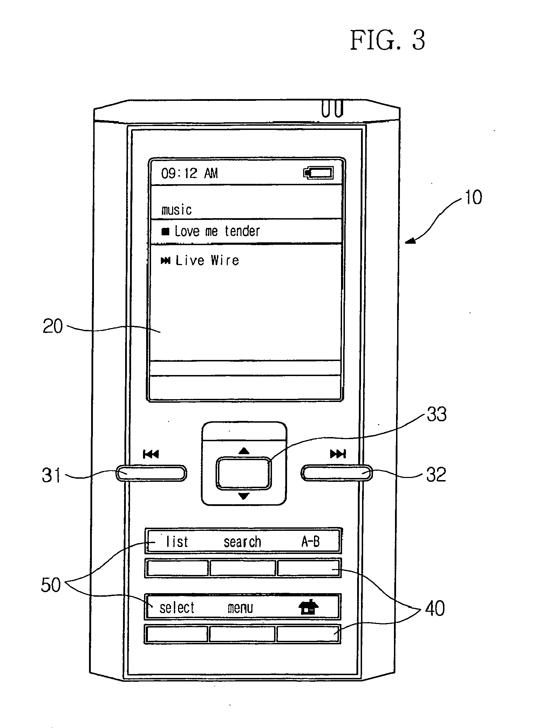

If the user pushes the soft button 40 corresponding to a desired mode (for example, a button corresponding to a music, radio or dictionary mode) in the first or second standby state (operation S230), the button information of the information display screens 50 changes to detailed information of the selected mode corresponding to the pushed soft button, as illustrated in FIGS. 3 to 7 (operation S240). Additionally, operation information corresponding to the selected mode may be displayed on the operation display screen 20, also as illustrated in FIGS. 3 to 7 (operation S240).

In another example, the user may push the soft button 40 adjacent to the "music" mode displayed in display screen 50 for a brief period of time in the first standby state. As a result, the current time, the remaining battery power, and operation information of the music mode, such as, for example, a title of a current song, a title of a next song and/or an operating state of the music mode, are displayed on the operation display screen 20, as illustrated in FIG. 3. In addition, detailed information of the music mode corresponding to the functions of the music mode (for example, list, search, A-B pre-selected section repetition, select, menu and/or a home icon or label) may be displayed on the information display screens 50, also as illustrated in FIG. 3.

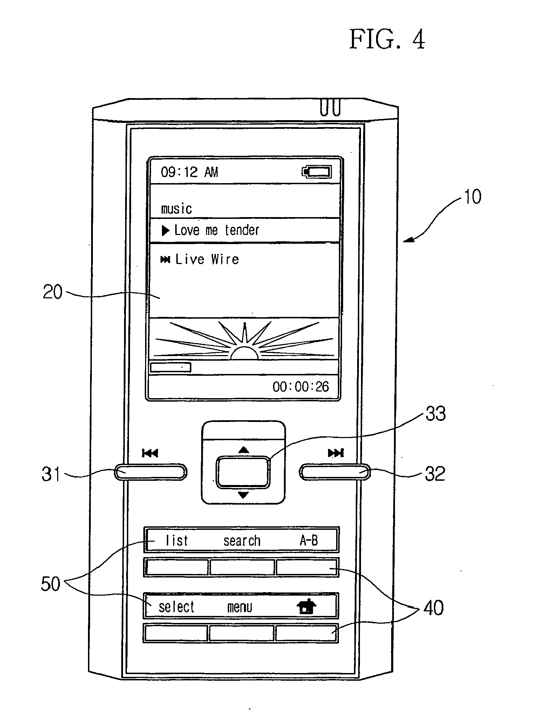

In another example, where the user pushes the soft button 40 adjacent to the "music" mode displayed in display screen 50 for a longer period of time than in the previous example (for example, about one or two seconds), music may begin to play without having to press another button. In this example, pressing and holding the soft button 40 for a longer period of time executes both the selection of the music mode and the playing of music. Alternatively, if the user chooses not to hold down the soft button 40 for a longer period of time but instead presses the soft button 40 only to select the music mode, then the wheel button 33 may be pressed to begin playing music. In addition to the music being played, the current time, the remaining battery power, and/or operation information of the music mode, such as, the title of the current song, the title of the next song, an equalizer, a playback slide, a playback time and/or the operating state of the music mode, are displayed on the operation display screen 20, as illustrated in FIG. 4. In addition, the detailed information of the music mode (i.e. the functions of the music mode), such as, list, search, A-B pre-selected section repetition, select, menu and/or a home icon or label is displayed on the information display screens 50 similarly to that illustrated in FIG. 3, as illustrated in FIG. 4.

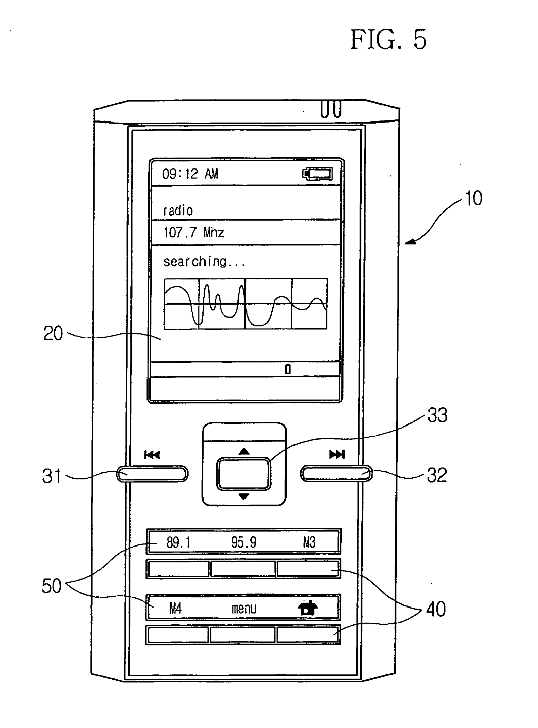

In another example, if the user pushes a soft button 40 adjacent to the "radio" mode displayed in display screen 50 for a brief period of time in the first standby state, the current time, the remaining battery power, and/or operation information corresponding to the radio mode, such as, for example, channel searching, are displayed on the operation display screen 20, as illustrated in FIG. 5. Additionally, detailed information corresponding to the function of the radio mode, such as 89.1 and/or 95.9 (channels set by the user), M3 and/or M4 (unset channels), menu and/or a home icon or label, may be displayed on the information display screens 50, also as illustrated in FIG. 5.

Similarly, in another example where the user pushes the soft button 40 adjacent to the "radio" mode displayed in display screen 50 for a longer period of time than in the previous example (for example, about one or two seconds), the radio mode begins to immediately play music. If, however, the user chooses not to hold down the soft button 40 for a longer period of time, but instead presses the soft button 40 only to select the "radio" mode, then the wheel button 33 may be pressed to begin playing the radio.

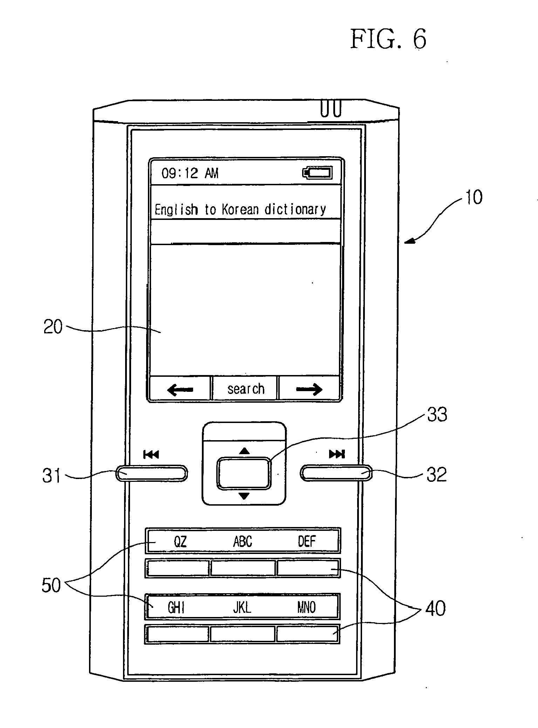

In another example the user may push the soft button 40 adjacent to the "dictionary" mode displayed in display screen 50 in the second standby state. Once the dictionary mode is selected, the current time, the remaining battery power, and operation information of the dictionary mode, such as, for example, a word search, are displayed on the operation display screen 20, as illustrated in FIG. 6. In addition, detailed information of the dictionary mode corresponding to, for example, a search function of the dictionary mode, such as, QZ, ABC, DEF, GHI, JKL and MNO, is displayed on the information display screens 50, also illustrated in FIG. 6. Once the search function information is displayed, the user may make a selection by pressing the soft button 40 corresponding to the search function desired. For example, if a user wants to look up a word beginning with the letter "A," the user can push the soft button 40 adjacent to the "ABC" search function displayed on display screen 50.

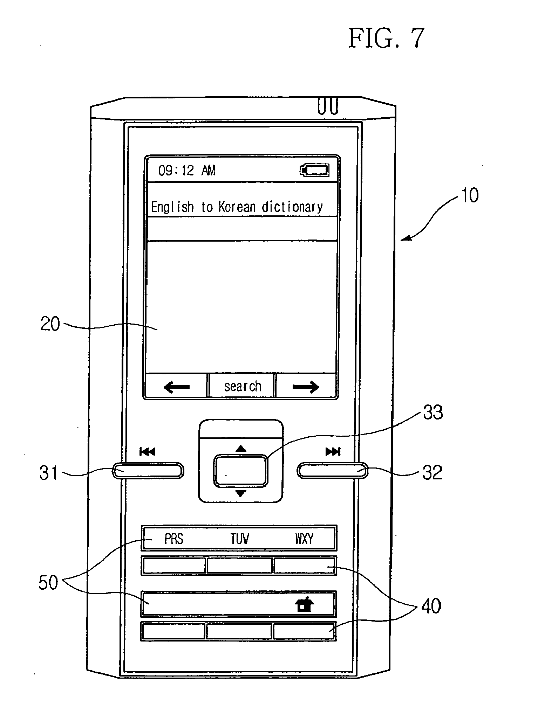

In another example, if the user pushes the wheel button 33 in the first dictionary mode state of FIG. 6, the digital multifunction device will enter a second dictionary mode state where the same information illustrated in FIG. 6 is displayed on the operation display screen 20 while the button information of the information display screens 50 is changed to represent more search function options for the dictionary, for example, PRS, TUV, WXY and/or a home icon or label, as illustrated in FIG. 7.

Once a mode is selected, the information display screen 50 will display detailed information of the selected mode, and the operation display screen will display operation information of the selected mode. For example, after a mode has been selected if the user pushes a soft button 40 corresponding to the detailed information of the information display screens 50 (for example, list, search, A-B, select or menu of FIG. 4), operation information of the selected mode is displayed on the operation display screen 20, as illustrated in FIGS. 3 to 7 (operation S250). Once a soft button 40 has been selected, the digital multifunction device performs the function of the selected detailed information, and displays operation information corresponding to the pushed soft button 40 (operation S260).

On the other hand, if the user pushes the wheel button 33 in the examples illustrated in FIGS. 3 to 7 (operation S270), the digital multifunction device performs a function of the operation information displayed on the operation display screen 20 (operation S280).

As described above, when the user pushes a button corresponding to a desired mode (for example, the music, video or radio mode) in the first standby state, the digital multifunction device provides detailed information of the desired mode while limiting unnecessary operation information and/or button information. In addition, in the case where the user pushes one of the desired mode buttons for a longer period of time (for example, about one or two seconds)in the standby state, the digital multifunction device immediately executes a function of the detailed information of the selected mode. Therefore, the digital multifunction device can display the optimum detailed information of each mode (for example, the music, video or radio mode) through the configuration of a reduced number of soft buttons 40.

Moreover, the digital multifunction device can return to a standby state by pushing the home icon or label button in any state.

Although the digital multifunction device integrates the music, video, radio, and dictionary modes of operation, these example operations have been disclosed herein for illustrative purposes, the present invention is not limited thereto.

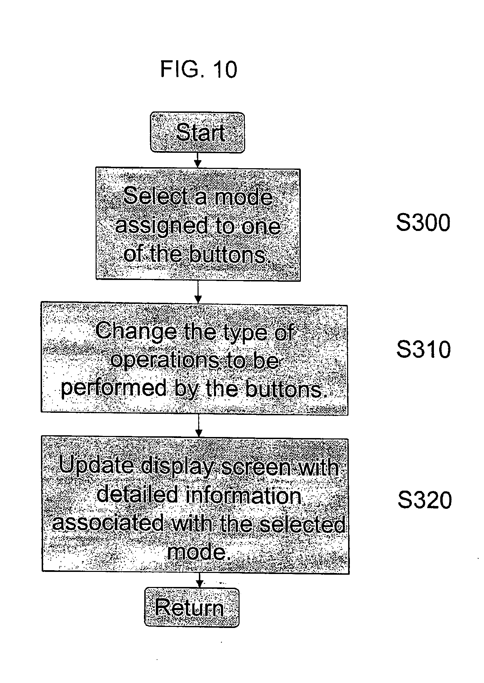

FIG. 10 is a flow chart illustrating a change in the type of operations performed by the soft buttons 40, according to an example embodiment of the present general inventive concept. A user may select a mode by pressing the soft button 40 adjacent to the desired mode displayed in display screen 50 (operation S300). Once the mode is selected, the type of operations to be performed by the soft buttons 40 changes (operation S310). The display screen 50 is then updated to display the changes by displaying detailed information of the selected mode (operations S320).

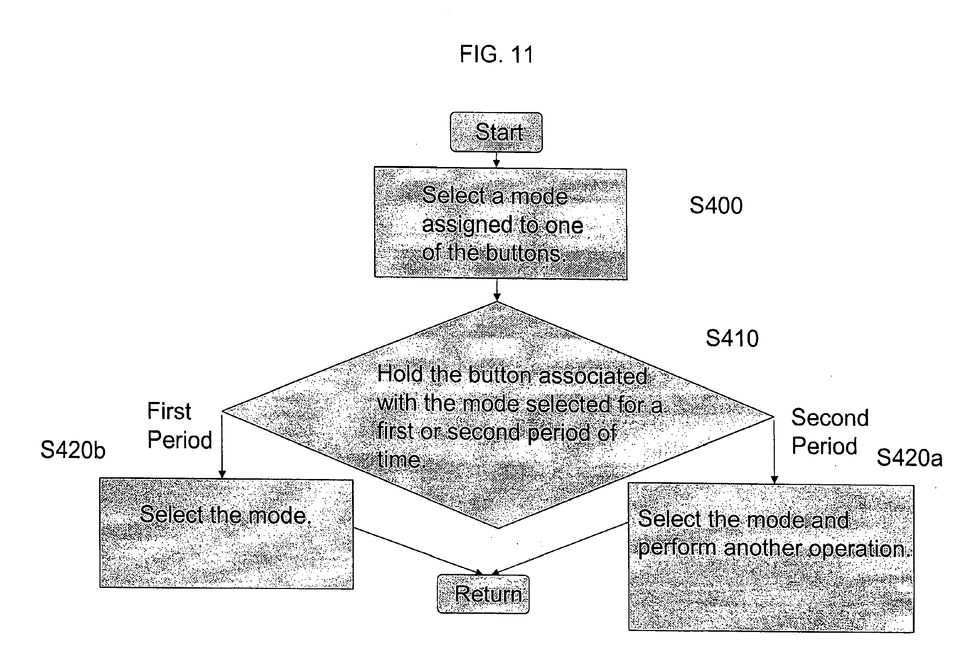

FIG. 11 is a flow chart illustrating more than one operation being performed in a single button selection, according to an example embodiment of the present general inventive concept. A user may select a mode by pressing the soft button 40 adjacent to the desired mode displayed in display screen 50 (operation S400). The user may make a choice as to whether to select and hold a button for a short period of time or a long period of time (operation S410). If the user presses the button for a short period of time, a desired mode is selected (operation S420a). If the user instead chooses to press the button for a longer period of time (for example, about one or two seconds), this will select the desired mode and perform an additional operation (operation S420b). The additional operation may be, for example, playing music at the same time that the music mode is selected, which may normally be performed by selecting button 33 once the music mode has been selected.

In another example, an integrated remote controller may combine functions of a plurality of remote controllers, such as, for example, a TV remote controller, a DVD remote controller, a home theater remote controller and/or an air conditioner remote controller, may be integrated into a single remote controller device. The present general inventive concept may also be applicable to an integrated remote controller, but should not be limited thereto. It will be understood that the present invention is applicable to a broad range of products.

As is apparent from the above description, preferred embodiments of the present invention include a digital multifunction device with multiple modes and an information display, where detailed information of functions corresponding to a selected mode of operation (for example, a music mode, video mode, radio mode, dictionary mode, game mode, set mode or other type of mode not described) is displayed so that the corresponding functions of the selected mode can be selected by the user through a number of buttons less than the total number of functions and modes of operation. Furthermore, the digital multifunction device may limit the amount of information displayed to the user to optimize the amount of information necessary to select each function.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital multifunction device with at least two modes of operation, comprising:
a plurality of buttons (31, 32, 33, 40) operable to select at least one of the at least two modes or detailed information of one of the at least two modes; and
a display screen (20, 50) to change a current mode information displayed on the display screen to the detailed information corresponding to the mode selected by the operation of one or more of the plurality of buttons.

2. The digital multifunction device of claim 1, wherein the plurality of buttons (31, 32, 33, 40) are adapted for a user to select one or more operations of the selected mode.

3. The digital multifunction device of claim 2, wherein the display screen (20) is adapted to display operation information of the selected mode.

4. The digital multifunction device of any preceding claim, wherein the plurality of buttons include:
a first selection button (33) to change or select operation information of the selected mode; and
a second selection button (40) to select any one of the modes or the detailed information of the selected mode.

5. The digital multifunction device of any preceding claim, wherein the digital multifunction device further comprises:
one or more information display screens (50) to display information describing the corresponding modes of each of the buttons (40), and once a mode is selected, displaying detailed information corresponding to the selected mode.

6. The digital multifunction device of claim 5, wherein the information display screen (50) is installed adjacent to the buttons (40).

7. The digital multifunction device of any preceding claim, further comprising:
a controller (100) for performing a control operation to display the detailed information or operation information of the mode selected according to a present operating state of the digital multifunction device.

8. The digital multifunction device of claim 7, wherein the controller (100) is adapted to perform a control operation to change the current mode to the selected mode or execute another operation of the selected mode in addition to the current mode being changed to the selected mode, according to a push and hold time of one of the plurality of buttons (33, 40).

9. A method of displaying information in a digital multifunction device with at least two modes, comprising:
selecting at least one button of a plurality of buttons (33, 40) to select a desired mode;
changing the mode information associated with each of the buttons to detailed information corresponding to the selected mode; and
displaying the detailed information.

10. The method of claim 9, wherein the displaying includes displaying only information corresponding to the selected mode.

11. The method of claim 10, wherein the information corresponding to the selected mode is the detailed information or operation information of the selected mode.

12. A device with dynamic button functionality comprising:
a plurality of buttons (33, 40) with at least two first and second levels of operation to be performed, in the first level of operation a mode can be selected from a plurality of modes, and in the second level of operation the operation a plurality of sub-mode functions of a predetermined mode can be selected; and
at least one information display screen (20, 50) to display the modes or the plurality of sub-mode functions based on the level of operation being performed.

13. The device of claim 12, wherein the at least one information display screen (50) changes to display only the plurality of sub-mode functions in the second level of operation.

14. The device of claim 12 or claim 13, wherein the predetermined mode is the mode selected in the first level of operation.

15. The device of any one of claims 12-14, further comprising:
a second display screen (20, 50) to show operation details of the selected mode.

16. The device of claim 15, wherein the operation details include information being displayed to the user to describe the current operation being performed by the device.

17. The device of any one of claims 12-16, wherein the modes included in the device include at least one of a digital music player, an analog radio player, and a dictionary.

18. The device of any one of claims 12-17, wherein the device performs the operation of a remote controller used to combine the operations of a plurality of remote controller devices into a single remote controller device.

19. A method of changing button functionality comprising:
selecting a mode assigned to one of a plurality of buttons (31, 32, 33, 40);
changing types of operations to be performed by the plurality of buttons based on the mode selected;
updating a display screen (50) by replacing displays of the modes assigned to the plurality of buttons with detailed information of functions associated with the selected mode; and
selecting one of the plurality of functions by selecting one of the plurality of buttons.

20. The method of claim 19, wherein all of the operations assigned to the plurality of buttons (31, 32, 33, 40) are changed to detailed information corresponding to the plurality of functions based on the selected mode.

21. A device to perform more than one operation in a single button selection, comprising:
a plurality of buttons (31, 32, 33, 40) to select one of a plurality of modes assigned to a respective plurality of buttons by holding the button associated with the selected mode for a first period of time to select the mode or holding the button for a second period of time to select the mode and perform a sub-mode function associated with the selected mode.

22. The device of claim 21, wherein the second period of time is longer than the first period of time.

23. The device of claim 21 or claim 22, wherein the sub-mode function performs immediate execution of the selected mode.

24. The method of claim 23, wherein the immediate execution of the selected mode includes playing music.

25. The method of claim 22, wherein the immediate execution of the selected mode includes performing an operation that is otherwise executable by another one of the plurality of buttons.

26. A method of performing more than one operation in a single button selection, comprising:
selecting one of a plurality of modes assigned to a respective plurality of buttons (31, 32, 33, 40); and
holding the button associated with the selected mode for a first period of time to select the mode or holding the button for a second period of time to select the mode and perform a sub-mode function associated with the selected mode.

27. The method of claim 26, wherein the second period of time is longer than the first period of time.

28. The method of claim 26 or claim 27, wherein the sub-mode function performs immediate execution of the selected mode.

29. The method of claim 28, wherein the immediate execution of the selected mode includes playing music.

30. The method of claim 28, wherein the immediate execution of the selected mode includes performing an operation that is otherwise executable by another one of the plurality of buttons.
